# EUROPÄISCHE PATENTSCHRIFT

(11) **EP 2 039 542 B1**
(45) Veröffentlichungstag und Bekanntmachung des Hinweises auf die Patenterteilung: **09.11.2011**
(21) Anmeldenummer: 08290889.8
(22) Anmeldetag: 19.09.2008
(51) Int. Cl.: B60H 1/00, B60H 3/06

(54) **Gehäuse, insbesondere für eine Belüftungs-, Heiz- oder Klimaanlage eines Kraftfahrzeuges**
Housing, especially for a ventilation, heating or air conditioning unit of a vehicle
Boîtier, notamment pour une installation de ventilation, chauffage ou climatisation de véhicule automobile

(30) Priorität: 19.09.2007 DE 102007044975
(43) Veröffentlichungstag der Anmeldung: 25.03.2009
(73) Patentinhaber: Behr GmbH & Co. KG, 70469 Stuttgart (DE); Behr France Rouffach SAS, 68250 Rouffach (FR)
(72) Erfinder: Meixner, Leonhard, 70825 Korntal-Münchingen (DE); Berger, Michael, 71642 Ludwigsburg (DE); Grieb, Andreas, 70499 Stuttgart (DE); Kreuzer, Walter, 71229 Leonberg (DE); Demmerle, Hervé, 68320 Wicksch Wihr (FR)
(74) Vertreter: Grauel, Andreas

(56) Entgegenhaltungen:
- DE-A1-102005 019 675
- DE-A1-102006 000 804
- DE-A1-102006 027 996
- DE-B3-102004 051 874
- GB-A- 2 346 437

## Beschreibung

Die Erfindung betrifft ein Gehäuse, insbesondere für eine Belüftungs-, Heiz oder Klimaanlage eines Kraftfahrzeuges gemäß dem Oberbegriff des Anspruchs 1 und eine Lüftungs-, Heiz- oder Klimaanlage gemäß dem Oberbegriff des Anspruchs 7 die ein solches Gehäuse aufweist.

Das Gehäuse einer Belüftungs-, Heiz- oder Klimaanlage eines Kraftfahrzeugs weist zumindest einen Verdampfer auf, der in dem Teil des Gehäuses untergebracht ist, der in den Innenraum des Fahrzeugs ragt. Aufgrund von Produktionsfehlem oder durch Korrosion oder Verschleiß kann die Dichtheit des Verdampfers nachlassen, wodurch Kältemittel auslaufen und in den Fahrzeuginnenraum gelangen kann. Deswegen kann es notwendig sein, den Verdampfer auszutauschen. Dazu muss eine Trennwand, die unten am Verdampfergehäuse angebracht ist, entfernt werden. Diese Trennwand muss ein Heraustreten von Kondenswasser, das am Verdampfer anfällt, verhindern. Beim Stand der Technik erfolgt diese Abdichtung durch eine Dichtschnur, die in den Verdampferdeckel eingelegt ist. Der Verdampferdeckel ist am Verdampfergehäuse mit angespritzt. Nachteilhaft bei diesem Stand der Technik ist die Tatsache, dass zum Wechseln des Verdampfers die komplette Belüftungs-, Heiz- oder Klimaanlage des Kraftfahrzeugs ausgebaut werden muss. Anschließend muss die Gehäusewanne entfernt werden, wodurch der Ausbau des Verdampfers nach unten aus dem Gehäuse möglich wird. Dieses Verfahren ist sehr langwierig und kostenintensiv. Außerdem ist es kaum möglich, die vom Verdampfergehäuse entfernte Gehäusewanne wieder so an das Gehäuse anzubringen, dass die erforderliche Dichtheit gewährleistet ist.

DE 10 2006 000804 offenbart einen Gehäuse nach dem Oberbegriff des Anspruchs 1.

Ausgehend von diesem Stand der Technik, ist es die Aufgabe der vorliegenden Erfindung, ein verbessertes Gehäuse, insbesondere für eine Belüftungs-, Heiz- oder Klimaanlage eines Kraftfahrzeugs bereitzustellen, durch das ein einfacher und kostengünstiger Austausch des Verdampfers ermöglicht wird und die Dichtheit des Gehäuses auch nach diesem Austausch gewährleistet bleibt.

Diese Aufgabe wird erfindungsgemäß durch ein Gehäuse mit den Merkmalen des Anspruchs 1 gelöst. Vorteilhafte Ausgestaltungen sind Gegenstand der Unteransprüche.

Erfindungsgemäß ist ein Gehäuse vorgesehen, mit zumindest einem Gehäuseteil, das einstückig über einen Verbindungsbereich mit dem Gehäuse verbunden ist, wobei der Verbindungsbereich zumindest eine Sollbruchstelle aufweist, so dass das zumindest eine Gehäuseteil von dem Gehäuse trennbar ist, wobei Verbindungsmittel am Gehäuse und/oder an einem Ersatzelement für das zumindest eine Gehäuseteil vorgesehen sind, mittels welcher das Ersatzelement am Gehäuse montierbar ist. Durch die Sollbruchstelle im Verbindungsbereich zwischen Gehäuse und Gehäuseteil ist eine einfachere Trennung des Gehäuseteils vom Gehäuse möglich. Unkontrollierte Risse beim Entfernen des Gehäuseteils vom Gehäuse und eine daraus folgende Zerstörung des Gehäuses können somit vermieden werden. Durch Verbindungsmittel am Gehäuse und/oder an einem Ersatzelement, das das zuvor entfernten Gehäuseteil ersetzt, ist eine Anbringung des Ersatzelements am Gehäuse möglich. Dadurch ist ein Ankleben des Ersatzelements am Gehäuse nicht nötig.

Das Ersatzelement ist mittels einer lösbaren Verbindung am Gehäuse montierbar. Dadurch ist eine Wiederentfemung des Ersatzelements vom Gehäuse denkbar und ein weiterer Austausch eines im Gehäuse befindlichen Bauteils möglich.

Die Anbringung des Ersatzelements ist mittels eines Scharniers auf einer Seite der durch das Herausbrechen der Trennwand gebildeten Öffnung und einer Schnappverbindung auf der gegenüberliegenden Seite der Öffnung gebildet sein. Gegebenenfalls kann die Schnappverbindung durch eine andere, bevorzugt lösbare Verbindung gebildet sein, also bspw. durch eine Schraubverbindung oder eine Verriegelung.

In einem bevorzugten Ausführungsbeispiel ist an dem Ersatzelement ein Dichtmittel angeordnet. Dieses kann z.B. angespritzt sein und zugleich den Zweck eines Verbindungselements erfüllen. So kann z.B. bei einer Nut-Feder-Verbindung das Dichtelement als Feder gestaltet sein, die in die Nut im Gehäuse eingreift.

Vorzugsweise ist die Sollbruchstelle durch Materialverjüngung gebildet. Diese kann bereits bei der Herstellung realisiert oder nachträglich durch Materialabtragung herbeigeführt werden. Alternativ dazu kann die Sollbruchstelle auch durch Perforation gebildet sein. Dabei werden die Perforationsöffnungen durch ein Dichtmittel verschlossen, wodurch das Austreten von Kondensat aus dem Gehäuse verhindert wird. Das Dichtmittel verstärkt den Über gangsbereich zwischen Ersatzelement und Gehäuse kaum und erschwert somit die Trennung nur unwesentlich.

Bevorzugt ist die Verbindung zwischen Gehäuse und Gehäuseteil über Versteifungsstege gesichert. Durch die Sollbruchstelle wird der Verbindungsbereich zwischen Gehäuse und Gehäuseteil geschwächt. Dadurch kann es zu einer ungewollten Beschädigung des Bereichs kommen, was durch die Versteifungsstege vermieden wird.

In einem bevorzugten Ausführungsbeispiel handelt es sich bei dem Gehäuse um ein Verdampfergehäuse, bei dem Gehäuseteil um eine Trennwand und bei dem Ersatzelement um eine Servicewand. Das Verdampfergehäuse ist der Teil der Belüftungs-, Heiz- oder Klimaanlage eines Kraftfahrzeugs, der den Verdampfer beinhaltet. Die Trennwand ist der Teil des Gehäuses, der zum Austausch des Verdampfers vom Gehäuse entfernt wird. Mit Hilfe der Servicewand wird das Gehäuse nach Austausch des Verdampfers wieder verschlossen.

Beim Gehäuse kann es sich ebenfalls um ein Filtergehäuse der Belüftungs-, Heiz- oder Klimaanlage handeln. Ferner kann eine gemeinsame durch eine Sollbruchstelle definierte Öffnung in der Trennwand für den Austausch des Verdampfers und Filters vorgesehen sein, welche nach einem Wechsel von Verdampfer oder Filter wieder durch eine Servicewand verschlossen wird.

Bei einem Verfahren zum Austausch von mindestens einem in einem erfindungsgemäßen Gehäuse angeordnetem Bauteil, wird das Gehäuseteil zunächst vom Gehäuse über eine vorgesehene Sollbruchstelle zwischen Gehäuseteil und Gehäuse getrennt, anschließend wird das zumindest eine Bauteil ausgetauscht oder gewartet und danach das Ersatzelements über am Gehäuse und/oder am Ersatzelement vorgesehenen Verbindungsmittel am Gehäuse befestigt.

Bei einem bevorzugten Ausführungsbeispiel des Verfahrens erfolgt die Befestigung des Ersatzelements am Gehäuse durch Schrauben, durch Einschnappen und/oder Einrasten, durch Bajonettverbindung oder durch Nut-Feder-Verbindung.

Im Folgenden wird die Erfindung anhand zweier Ausführungsbeispiele in Bezugnahme auf die beiliegende Zeichnung näher erläutert.

Fig. 1 zeigt einen Teil eines Gehäuses gemäß dem ersten Ausführungsbeispiel vor dem Austausch des Verdampfers in der Seitenansicht.

Fig. 2 zeigt vergrößert im Detail ein Gehäuseteil im Schnitt, wobei der Schnitt entlang der Linie A-A aus Fig. 1 verläuft.

Fig. 3 zeigt einen Teil des Gehäuses von Fig. 1 nach dem Austausch des Verdampfers in der Seitenansicht.

Fig. 4 zeigt vergrößert im Detail ein Gehäuseteil im Schnitt, wobei der Schnitt entlang der Linie B-B aus Fig. 3 verläuft.

Fig. 5 zeigt einen Teil eines Gehäuses gemäß dem zweiten Ausführungsbeispiel vor dem Austausch des Filters in einer Seitenansicht.

Fig. 6 zeigt den Teil des Gehäuses von Fig. 5 nach dem Austausch des Filters.

Fig. 7 zeigt eine Detailansicht der Sollbruchstelle des Gehäuses von Fig. 5.

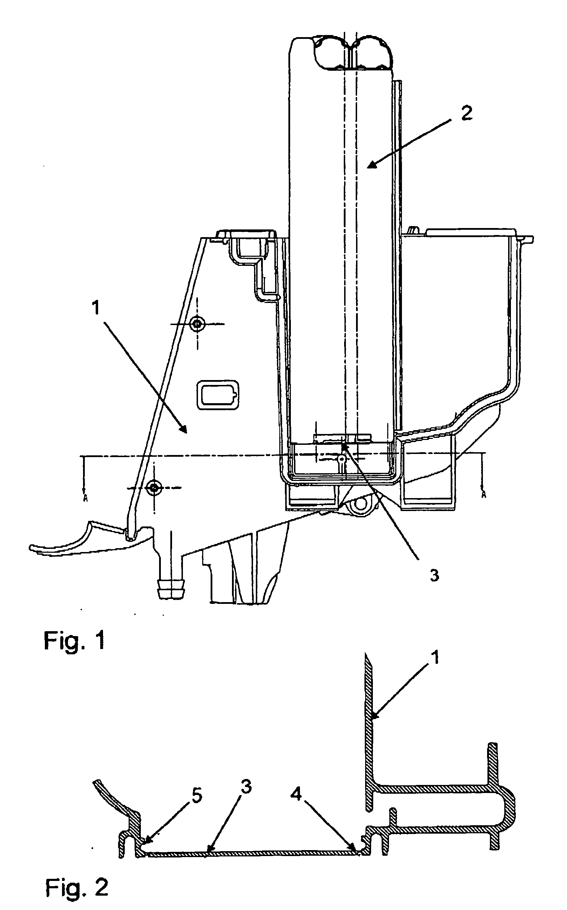

Gemäß dem ersten Ausführungsbeispiel von Fig. 1 ist das Gehäuse als Verdampfergehäuse 1, das Gehäuseteil als Trennwand 3 und das Bauteil als Verdampfer 2 ausgebildet. Vom Verdampfergehäuse 1 ist lediglich der untere Teil dargestellt. Bei der Erstmontage wird der obere Teil des Verdampfergehäuses nach dem Einsetzen des Verdampfers 2 auf den unteren Gehäuseteil aufgesetzt und der Verdampfer 2 somit umschlossen. Die Trennwand 3 ist unten am Gehäuse 1 angespritzt, wobei der Verbindungsbereich zwischen Trennwand 3 und Gehäuse 1 eine hier nicht dargestellte Sollbruchstelle aufweist.

Für den Fall einer notwendigen Wartung oder eines Austausches des Verdampfers wird über diese Sollbruchstelle die Trennwand 3 vom Gehäuse 1 weggebrochen. Somit wird der Verdampfer 2 freigelegt und kann aus dem Gehäuse 1 entfernt werden.

Aus der Detailansicht in Fig. 2 ist vergrößert die Trennwand 3 aus Fig. 1 im Schnitt zu sehen, wobei der Schnitt entlang der Linie A-A aus Fig. 1 verläuft. Hier ist die Sollbruchstelle 4, die im Verbindungsbereich zwischen Trennwand 3 und Gehäuse 1 liegt, erkennbar. Die Sollbruchstelle 4 ist hier durch Materialverjüngung gebildet. Sie kann jedoch auch durch Perforation oder durch eine Kombination aus Materialverjüngung und Perforation gebildet sein.

Nach erfolgter Wartung beziehungsweise bei erforderlichem Tausch des Verdampfers, wird dieser durch die, durch die herausgebrochene Trennwand 3 freigelegte Öffnung, in das Gehäuse eingesetzt. Knapp oberhalb des Bereichs der vordem noch eingebauten Trennwand 3 ist an der Innenseite des Gehäuses 1 eine Nut 5 eingebracht. Diese Nut 5 dient nach Austausch des Verdampfers 2 zur Aufnahme des Ersatzelements, vorliegend einer Servicewand 31.

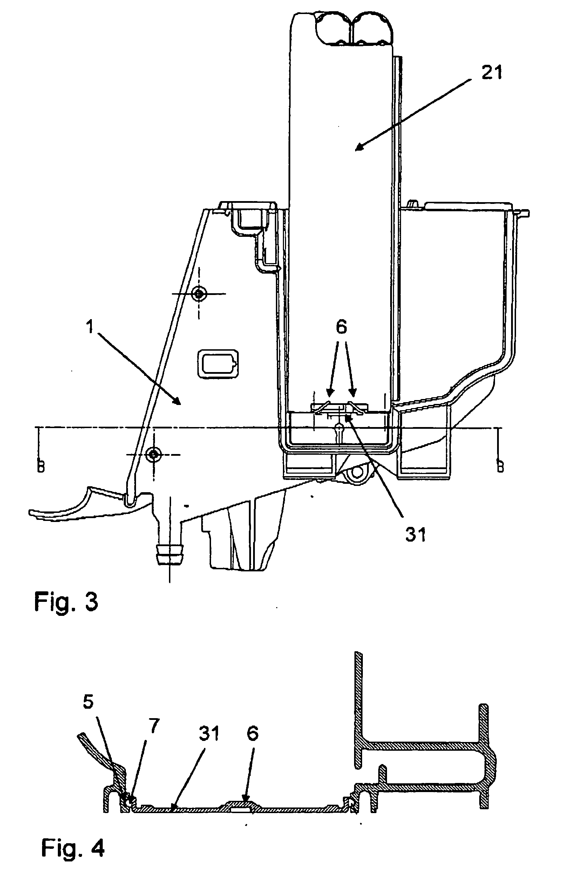

Fig. 3 zeigt das erfindungsgemäße, bevorzugte Gehäuse 1 nach dem Einsetzen des Verdampfers 21 in das Gehäuse 1 und nach Anbringen der Servicewand 31 am Gehäuse 1. An der Servicewand 31 sind Federelemente 6 angespritzt, die unter einen Einsatz des Verdampfers 21 geschoben werden. Dadurch wird die Servicewand 31 im Verdampfergehäuse gehalten und nach unten gedrückt.

Fig. 4 zeigt vergrößert die Servicewand 31, deren Dichtung 7 in die Nut 5 des Gehäuses 1 eingreift. Die Dichtung 7 kann im Zwei-Komponenten-Spritzgussverfahren mit der Servicewand 31 hergestellt, bzw. an die Servicewand 31 angespritzt werden, wobei die Dichtung 7 bevorzugt eine geringere Härte aufweist als die übrige Servicewand 31. Vorteilhafterweise wird so eine bessere Dichtwirkung erzielt. Die Dichtung 7 kann z.B. einen halbkreisförmigen Querschnitt aufweisen, der entweder hohl oder ausgefüllt ist. Die Federelemente 6 sind an der Servicewand 31 ebenfalls an das Gehäuse 1 angespritzt.

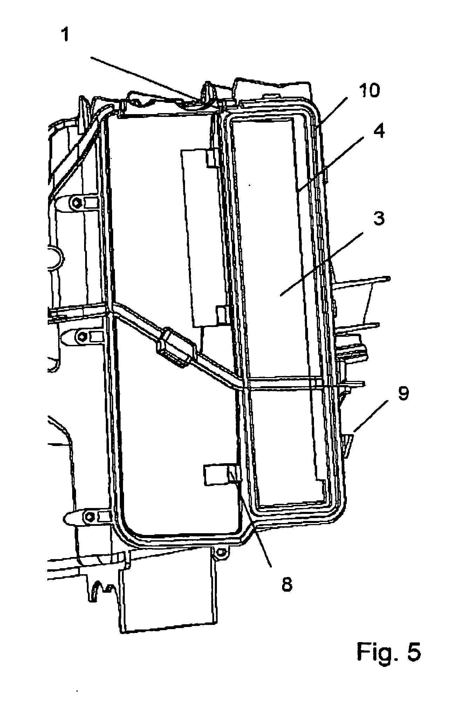

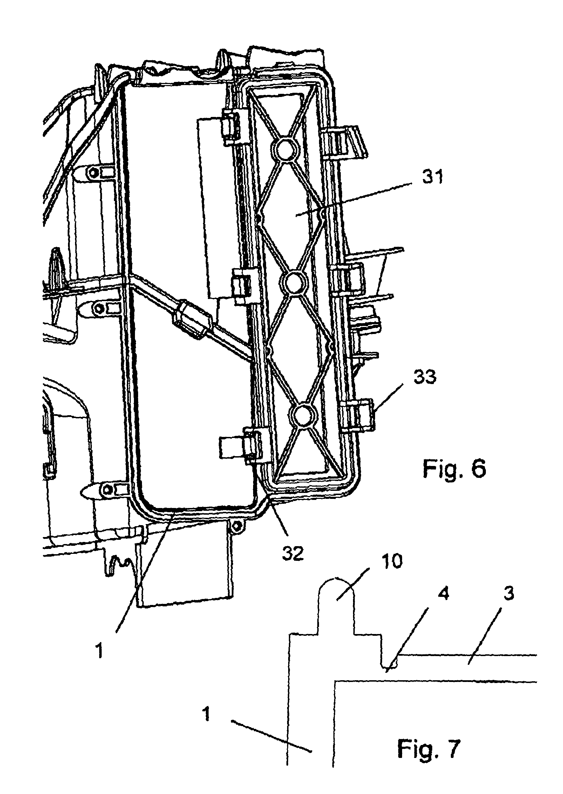

Im Folgenden wird unter Bezugnahme auf die Figuren 5 bis 7 das zweite Ausführungsbeispiel näher erläutert. Hierbei sind gleiche oder äquivalente Elemente mit denselben Bezugszeichen wie beim zuvor beschriebenen ersten Ausführungsbeispiel versehen. Gemäß dem zweiten Ausführungsbeispiel ist das Gehäuse als Filtergehäuse 1, das Gehäuseteil als Trennwand 3 und das Bauteil als Filter (nicht dargestellt) ausgebildet. Das Filtergehäuse 1 ist vorliegend zweiteilig ausgebildet. Bei der Erstmontage wird der obere Teil des Filtergehäuses nach dem Einsetzen des Filters auf den unteren Gehäuseteil aufgesetzt und der Filter somit umschlossen. Die Trennwand 3 ist am Gehäuse 1 angespritzt, wobei der Verbindungsbereich zwischen Trennwand 3 und Gehäuse 1 eine Sollbruchstelle 4 aufweist. Auf Grund der zweiteiligen Ausgestaltung des Gehäuses 1 und des Verlaufs der Gehäuseteilung ist auch die Trennwand 3 zweiteilig ausgebildet (siehe Fig. 5). Die Sollbruchstelle 4 ist vorliegend wiederum durch eine Materialverjüngung gebildet (siehe Fig. 7). Sie kann jedoch auch in diesem Fall durch Perforation oder durch eine Kombination aus Materialverjüngung und Perforation gebildet sein.

Für den Fall einer notwendigen Wartung oder eines Austausches des Filters wird über diese Sollbruchstelle 4 die Trennwand 3 vom Gehäuse 1 entfernt, wobei vorliegend mittels eines Messers oder dergleichen der die Sollbruchstelle 4 bildenden Nut entlang geschnitten wird. Somit wird der Filter freigelegt und kann aus dem Gehäuse 1 entfernt und ein neuer Filter eingesetzt werden.

Die Öffnung im Gehäuse 1, welche durch das Herausschneiden der Trennwand 3 entlang der Sollbruchstelle 4 entstanden ist, wird nach erfolgtem Filterwechsel entsprechend dem ersten Ausführungsbeispiel durch eine Servicewand 31 ersetzt. Im Unterschied zum ersten Ausführungsbeispiel sind jedoch an der Außenseite des Gehäuses 1 hinterschnittene Vorsprünge 8 und 9 ausgebildet, welche durch entsprechend ausgebildete Bereiche 32 und 33 der Servicewand 31 hintergriffen werden. Vorliegend sind auf der in Fig. 6 links dargestellten Seite der Servicewand 31 achsenartige Bereiche 32 vorgesehen, welche in Verbindung mit den hinterschnittenen Vorsprüngen 8 als eine Art Schamiere dienen, während auf der gegenüberliegenden Seite der Servicewand 31 hakenartige Vorsprünge vorgesehen sind, welche die Vorsprünge 9 des Gehäuses 1 in Art einer Schnappverbindung hintergreifen und so die Servicewand 31 am Gehäuse 1 halten. Somit bilden die Vorsprünge 8 und 9 des Gehäuses 1 Verbindungsmittel, mit welchen die Bereiche 32 und 33 der Servicewand 31 zusammenwirken.

Umlaufend um die Trennwand 3 ist vorliegend eine nach außen vorstehende Rippe 10 vorgesehen, welche mit einer entsprechenden Nut in der Servicewand 31 zusammenwirkt und die miteinander verbundenen Teile abdichtet, wobei zusätzlich in der Nut ein elastisch verformbares Dichtelement vorgesehen sein kann.

Um eine ausreichende Formstabililtät bei möglichst geringem Gewicht der Servicewand 31 zu ermöglichen, ist die Servicewand 31 mit einer durch fachwerkartig angeordnete Rippen gebildeten Verstärkungsstruktur auf ihrer Außenseite versehen.

Obwohl vorstehend nicht explizit beschrieben, kann bei entsprechender Anordnung über eine durch eine Sollbruchstelle in einer Gehäusewand öffenbare Öffnung ein beliebiges Bauteil der Belüftungs-, Heiz oder Klimaanlage eines Kraftfahrzeuges ausgetauscht und anschließend die Öffnung wieder durch eine Servicewand verschlossen werden. Gegebenenfalls kann es auch erforderlich sein, über eine derartige Öffnung zuerst ein anderes Bauteil zu entfernen, bevor das eigentlich auszutauschende Bauteil erreicht und ausgetauscht werden kann.

## Patentansprüche

1. Gehäuse (1), insbesondere für eine Belüftungs-, Heiz- oder Klimaanlage eines Kraftfahrzeuges mit zumindest einem Gehäuseteil (3), das einstückig über einen Verbindungsbereich mit dem Gehäuse (1) verbunden ist, wobei der Verbindungsbereich zumindest eine Sollbruchstelle (4) aufweist, so dass das zumindest eine Gehäuseteil (3) von dem Gehäuse (1) trennbar ist, wobei Verbindungsmittel (5, 7; 8, 9, 32, 33) am Gehäuse (1) und/oder an einem Ersatzelement (31) für das zumindest eine Gehäuseteil (3) vorgesehen sind, mittels welcher das Ersatzelement (31) am Gehäuse (1) montierbar ist, und wobei
das Ersatzelement (31) mittels einer lösbaren Verbindung am Gehäuse (1) montierbar ist, **dadurch gekennzeichnet, dass** die lösbare Verbindung auf einer Seite als eine Art Scharnierverbindung und auf der anderen Seite als Schnappverbindung, Schraubverbindung oder Verriegelung ausgeführt ist.

2. Gehäuse (1) nach einem der vorhergehenden Ansprüche, **dadurch gekennzeichnet, dass** an dem Ersatzelement (31) ein Dichtmittel (7) angeordnet ist.

3. (1) nach einem der vorhergehenden Ansprüche, **dadurch gekennzeichnet, dass** die Sollbruchstelle (4) durch Materialverjüngung oder durch Perforation gebildet ist.

4. Gehäuse (1) nach einem vorhergegangenen Ansprüche, **dadurch gekennzeichnet, das** die Verbindung zwischen Gehäuse (1) und Gehäuseteil (3) über Versteifungsstege gesichert ist

5. Gehäuse (1) nach einem der vorhergegangenen Ansprüche, **dadurch gekennzeichnet, dass** es sich bei dem Gehäuse (1) um ein Verdampfergehäuse und/oder Filtergehäuse, bei dem Gehäuseteil (3) um eine Trennwand und bei dem Ersatzelement (31) um eine Servicewand handelt.

6. Gehäuse (1) nach einem der vorhergegangenen Ansprüche, **dadurch gekennzeichnet, dass** das Gehäuse (1) mindestens zweiteilig ausgebildet ist, wobei die Unterteilung auch durch den Bereich des abtrennbaren Gehäuseteils (3) verläuft, und dass das Ersatzelement (31) einteilig ausgebildet ist.

7. Lüftungs-, Heiz- oder Klimaanlage, insbesondere für Kraftfahrzeuge, **dadurch gekennzeichnet, dass** sie ein Gehäuse (1) nach einem der vorhergehenden Ansprüche aufweist.

## Claims

1. A housing (1), in particular for a ventilation, heating, or air conditioning system of a motor vehicle, comprising at least one housing part (3) which is connected as one piece to the housing (1) via a connecting region, wherein the connecting region comprises at least one predetermined breaking point (4), thereby enabling the at least one housing part (3) to be separated from the housing (1), wherein connecting means (5, 7; 8, 9, 32, 33) are provided on the housing (1) and/or on a spare element (31) for the at least one housing part (3), using which the spare element (31) can be mounted on the housing (1), and whereby the spare element (31) can be mounted on the housing (1) via a detachable connection, **characterized in that** the detachable connection is designed on one side as a type of hinge connection and on the other side as a snap-in connection, threaded connection, or latching device.

2. The housing (1) according to one of the preceding claims, **characterized in that** a sealing means (7) is disposed on the spare element (31).

3. The housing (1) according to one of the preceding claims, **characterized in that** the predetermined breaking point (4) is formed by material tapering or perforation.

4. The housing (1) according to one of the preceding claims, **characterized in that** the connection between the housing (1) and the housing part (3) is secured via reinforcement segments.

5. The housing (1) according to one of the preceding claims, **characterized in that** the housing (1) is an evaporator housing and/or filter housing, the housing part (3) is a partition wail, and the spare element (31) is a service wall.

6. The housing (1) according to one of the preceding claims, **characterized in that** the housing (1) is composed of at least two pieces, wherein the subdivision also extends through the region of the separable housing part (3), and the spare element (31) is a single piece.

7. A ventilation, heating, or air conditioning system, in particular for motor vehicles, **characterized in that** it comprises a housing (1) according to one of the preceding claims.

## Revendications

1. Carter (1), en particulier pour un système de ventilation, de chauffage ou de climatisation d'un véhicule automobile, comprenant au moins une partie de carter (3) qui, via une zone d'assemblage, est reliée au carter (1) en formant une seule et même pièce avec celui-ci, où la zone d'assemblage présente au moins un point destiné à la rupture (4), de sorte que la partie de carter (3) au moins au nombre de un peut être séparée du carter (1), où il est prévu, pour la partie de carter (3) au moins au nombre de un, des moyens d'assemblage (5, 7 ; 8, 9, 32, 33) placés sur le carter (1) et / ou sur un élément de rechange (31), moyens d'assemblage à l'aide desquels l'élément de rechange (31) peut être monté sur le carter (1), et où l'élément de rechange (31) peut être monté sur le carter (1) au moyen d'un assemblage amovible,
**caractérisé en ce que** l'assemblage amovible est réalisé, sur un côté, comme une sorte d'assemblage à charnière et, sur l'autre côté, comme un assemblage à encliquetage, un assemblage vissé ou bien comme un verrouillage.

2. Carter (1) selon l'une quelconque des revendications précédentes, **caractérisé en ce qu'**un moyen d'étanchéité (7) est disposé sur l'élément de rechange (31).

3. Carter (1) selon l'une ou l'autre des revendications précédentes, **caractérisé en ce que** le point destiné à la rupture (4) est formé par diminution de matière ou par perforation.

4. Carter (1) selon l'une quelconque des revendications précédentes, **caractérisé en ce que** l'assemblage entre le carter (1) et la partie de carter (3) est consolidé par des nervures de renfort.

5. Carter (1) selon l'une quelconque des revendications précédentes, **caractérisé en ce que**, concernant le carter (1) il s'agit d'un carter d'évaporateur et / ou d'un logement de filtre, concernant la partie de carter (3) il s'agit d'une paroi de séparation et, concernant l'élément de rechange (31) il s'agit d'unie paroi de service,

6. Carter (1) selon l'une quelconque des revendications précédentes, **caractérisé en ce que** le carter (1) est configuré au moins en deux parties, où la subdivision passe également par la zone de la partie de carter (3) séparable, et **en ce que** l'élément de rechange (31) est configuré en formant une seule et même pièce.

7. Système de ventilation, de chauffage ou de climatisation, en particulier pour des véhicules automobiles, **caractérisé en ce qu'**il présente un carter (1) selon l'une quelconque des revendications précédentes.
